# EUROPÄISCHE PATENTANMELDUNG

(11) **EP 0 665 100 A1**
(43) Veröffentlichungstag der Anmeldung: **02.08.1995**
(21) Anmeldenummer: 94119919.2
(22) Anmeldetag: 16.12.1994
(51) Int. Cl.: B32B 3/24, B32B 15/08, A47B 96/18

(54) **Arbeitsplatte**

(30) Priorität: 28.12.1993 EP 93120995; 20.05.1994 DE 9408337 U
(71) Anmelder: CARL AUG. PICARD GMBH & CO. KG., D-42857 Remscheid (DE)
(72) Erfinder: Picard, Walter, D-42857 Remscheid (DE); Winkler, Stefan, D-42855 Remscheid (DE); Paller, Günter, Dr., D-42855 Remscheid (DE)
(74) Vertreter: Patentanwälte Dr. Solf & Zapf

(57) **Zusammenfassung**

Arbeitsplatte (1), bestehend aus einer metallischen Grundplatte (2) und einer auf dieser ein- oder beidseitig angeordneten dünneren Verschleißschutzplatte (4), wobei die Verschleißschutzplatte (4) mit der Grundplatte (2) mittels einer Klebstoffolie (3) vollflächig verbunden ist, die aus einem strukturellen Trägermaterial und einem auf diesem beidseitig aufgebrachten polymeren Klebstoff gebildet ist.

## Beschreibung

Die vorliegende Erfindung betrifft eine Arbeitsplatte, bestehend aus einer metallischen Grundplatte und einer auf dieser ein- oder beidseitig angeordneten dünneren Verschleißschutzplatte.

Es ist bekannt bei den vorstehenden Arbeitsplatten, die Verschleißschutzplatte auf der Grundplatte mit mechanischen Mitteln zu befestigen. Diese Art der Befestigung ist technisch sehr aufwendig und ermöglicht nicht die Herstellung einer innigen kraftschlüssigen Verbindung zwischen den beiden Platten.

Auch ist es bekannt, mittels eines Klebers die beiden Platten zu verbinden. Bei diesen Klebeverbindungen zwischen beispielsweise Metallen, Metallen und Hartmetallen und Metallen und Keramiken verursacht der Kleber aufgrund der Schwindung beim Aushärteprozeß Eigenspannungen, die bei dünnwandigen Verschleißschutzplatten zum Verzug führen. Hierbei ist es vollkommen gleichgültig, von welchem Klebstoffsystem der Kleber abstammt. Beispielsweise werden für ein Epoxidharzsystem Werte bis zu 20 N/mm² induzierte Eigenspannungen in der Klebefläche hervorgerufen. Gerade im Verschleißschutz, wo eine dünne teure Verschleißschutzplatte auf eine dickere billige Grundplatte aufgebracht wird, führen solche Eigenspannungen bei ungleicher Wandstärkenverteilung zum Verzug. Eine wirtschaftliche Herstellung der Bauteile ist dann nicht mehr möglich. Um dies zu vermeiden, müßte der Klebewerkstoff im Idealfall die gleichen mechanischen und thermischen Eigenschaften wie die beiden zu verklebenden Partner aufweisen, was jedoch nicht erreichbar ist.

Der Erfindung liegt das Problem zugrunde, eine gattungsgemäße Arbeitsplatte zu schaffen, bei der die beiden Platten durch Kleben verbunden werden, wobei jedoch die Eigenspannung in der Klebeschicht weitgehend reduziert wird, so daß ein Verzug vermieden werden kann.

Erfindungsgemäß wird dies dadurch erreicht, daß die Verschleißschutzplatte mit der Grundplatte mittels einer Klebstoffolie vollflächig verbunden ist, die aus einem strukturellen Trägermaterial und einem auf diesem beidseitig aufgebrachten polymeren Klebstoff gebildet ist.

Hierbei besteht vorteilhafterweise das Trägermaterial aus einem Gewebe oder Vlies aus Glasfasern, Zellstoff, Polyamidfasern und/ oder Kohlefasern.

Durch die Erfindung sind die mechanischen Eigenschaften der Klebstoffolie den Eigenschaften der zu verklebenden Platten derart angepaßt, daß ein Eigenschaftsprofil gegeben ist, das etwa bzw. in der Nähe zwischen den Eigenschaftsprofilen der zu verklebenden Platten liegt. Durch die Zugabe des strukturellen Verstärkungsstoffs können nicht nur die bereits bekannten Vorteile des Verstärkens von Klebstoffen, nämlich unter anderem eine höhere Klebeschichtfestigkeit genutzt werden, sondern auch die aus der Verstärkung von Kunststoffen bekannten Vorteile. So führt z.B. der Zusatz von 30 Gew.% Glasfasern in Form eines Glasfasergewebes zu einer Verdoppelung der Zugfestigkeit, einer Verdreifachung des E-Moduls und der Reduzierung der Schrumpfung und der Längenausdehnung auf ein Drittel. Hierdurch wird der Abbau der Eigenspannungen zwischen den beiden Platten erreicht.

Die erfindungsgemäße Klebstoffolie kann auch als Formzuschnitt mit den bekannten Vorteilen eingesetzt werden. Damit können z.B. Platten miteinander verklebt werden, die Löcher oder Durchbrüche aufweisen. Gerade feine Strukturen müssen nach dem Verkleben nicht gereinigt werden. Erfindungsgemäß wird die Klebstoffolie als Zuschnitt aufgelegt und erst dann der eigentliche Klebeprozeß gestartet, beispielsweise durch Wärme, Druck, Mikrowellen oder ähnlichem.

Es ist vorteilhaft, wenn die Klebstoffolie aus einem Epoxidharz mit einem Glasfasergewebe gebildet wird. Die Dickentoleranz, die mit einer derartigen erfindungsgemäßen Klebstoffolie erreicht wird, liegt im Bereich von wenigen hundertstel Millimetern. Der Klebeprozeß wird bei der Erfindung durch Wärme ausgelöst; so kann beispielsweise die Härtetemperatur bei ca. 170°C bei einer Härtezeit von beispielsweise 60 Minuten liegen.

Vorteilhafte Ausgestaltungen der Erfindung sind in den Unteransprüchen enthalten.

Anhand der in den beiliegenden Zeichnungen dargestellten Ausführungsbeispiele wird die Erfindung nunmehr näher erläutert.

Es zeigen:
- Fig. 1: einen Schnitt durch eine erfindungsgemäße Arbeitsplatte,
- Fig. 2: eine Aufsicht auf eine als Auskleidungsplatte für Formkammern in Formmaschinen ausgebildete erfindungsgemäße Arbeitsplatte,
- Fig. 3: einen Schnitt entlang der Schnittlinie III-III in Fig. 2 und
- Fig. 4: eine Aufsicht entsprechend des Details IV in Fig. 3.

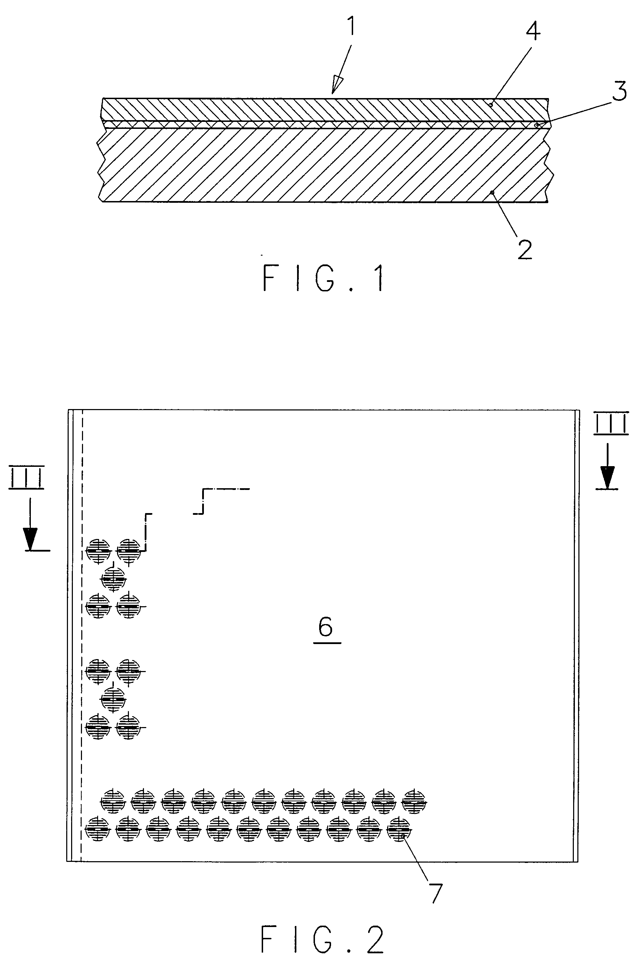

Wie aus Fig. 1 zu erkennen ist, besteht eine Ausführung einer erfindungsgemäßen Arbeitsplatte 1 aus einem dreilagigen Verbund. Die erfindungsgemäße Arbeitsplatte 1 kann insbesondere großformatig ausgebildet sein und weist beispielsweise eine Länge von 2 Meter und eine Breite von 1 Meter auf. Es können auch von der Rechteckform abweichende Formen gewählt werden. Die Arbeitsplatte 1 besteht aus einer Grundplatte 2 und einer auf dieser über eine Klebstoffolie 3 verbundenen Verschleißschutzplatte 4. Die Grundplatte 2 besteht aus Metall, beispielsweise Stahl, Aluminium oder dergleichen. Die Verschleißschutzplatte 4 kann beispielsweise aus einem verschleißfesten Stahl bestehen oder aber auch aus Keramikmaterial oder Hartmetall. Das Dickenverhältnis zwischen Grundplatte 2 und Verschleißschutzplatte 4 liegt insbesondere im Bereich zwischen 3:1 bis 15:1. Die Verschleißschutzplatte 4 besitzt etwa eine Dicke von 1,0 bis 3 mm. Zweckmäßigerweise kann das Verhältnis vom Gesamtdicke der Arbeitsplatte zur größten Längenausdehnung 1:20 bis 1:2000 betragen. Die Klebstoffolie 3 besteht aus einem strukturellen Trägermaterial und einer beidseitig auf diesem befindlichen Klebstoff. Das strukturelle Trägermaterial kann ein Gewebe oder Vlies aus Glasfasern, Zellstoff, Polyamidfasern und/oder Kohlefasern sein. Als Klebstoff wird vorzugsweise ein Epoxidharz verwendet. Die Dicke der Klebstoffolie 3 liegt im Bereich von etwa 0,5 bis 2 mm.

Die Klebstoffolie 3 kann insbesondere als Formzuschnitt ausgebildet sein, hierbei können auch in der Klebstoffolie 3 beispielsweise Löcher vorgesehen werden, die mit in den Platten 2, 4 ausgebildeten Durchbrüchen oder Löchern korrespondieren. Die Verklebung der Grundplatte 2 mit der Verschleißschutzplatte 4 mittels der Klebstoffolie 3 erfolgt vorzugsweise in einem Klebeprozeß, wobei beispielsweise eine Härtetemperatur von 170°C vorgesehen ist und gleichzeitig eine Druckbeaufschlagung über die gesamte Fläche der Arbeitsplatte 1 erfolgt. Bei einem beidseitigen Verkleben jeweils einer Verschleißschutzplatte 4 über jeweils eine Klebstoffolie 3 mit der Grundplatte 2 entsteht ein fünflagiger Verbund.

Durch die erfindungsgemäße Ausgestaltung ergeben sich folgende Vorteile:
Die zu verklebenden Platten 2, 4 können fertig bearbeitet sein, d.h. nach dem Verkleben ist die erfindungsgemäße Arbeitsplatte 1 einsatzbereit, so daß kein Fertigungsschritt nach dem Verkleben erforderlich ist.

Es tritt keine Beeinflussung der Einzeleigenschaften von der Grundplatte 2 und der Verschleißschutzplatte 4 durch den Klebeprozeß auf, insbesondere wird der Vergütungszustand beispielsweise der Verschleißschutzplatte 4 nicht durch die beim Klebeprozeß auftretenden Temperaturen beeinflußt.

Die Klebstoffolie 3 kann trocken aufgebracht werden, was ein einfaches Handling ermöglicht.

Die Dicke der aufgeklebten Klebstoffolie 3 ist definiert und sehr eng toleriert, so daß tatsächlich kein Planschleifen der verklebten Platten 2, 4 mehr erfolgen muß. Die Klebefuge hat eine definierte Dicke.

Das in der Klebstoffolie 3 vorhandene strukturelle Trägermaterial ist derart einstellbar, daß auf individuelle Anforderungen reagiert werden kann.

Im Falle einer duroplastischen Verbindung zwischen der Grundplatte 2 und der Verschleißschutzplatte 4 kann die Grundplatte 2 durch thermische Zerstörung oder mechanisches Abtragen wieder genutzt werden. Im Falle einer thermoplastischen Verklebung kann die Grundplatte 2 durch Anschmelzen der Klebeschicht wiederverwendet werden.

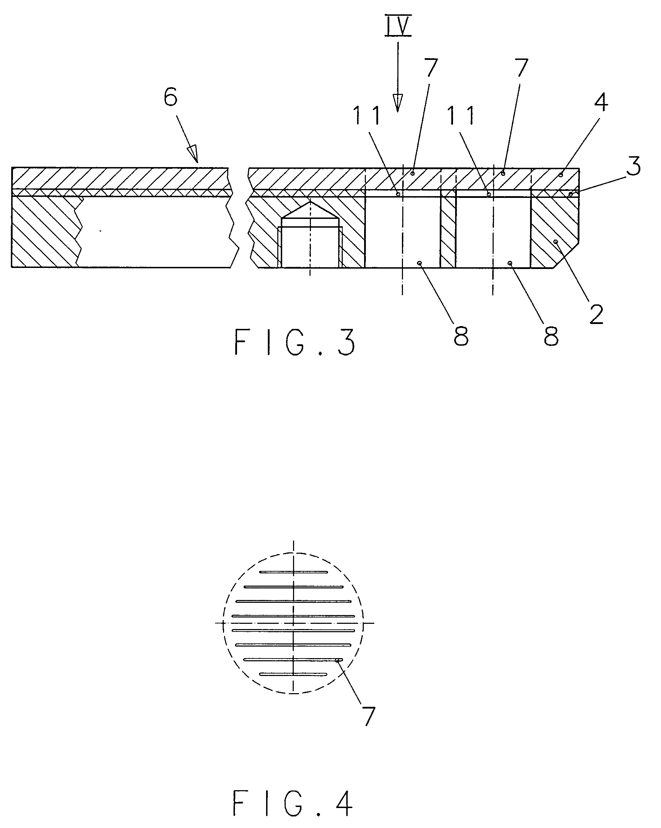

In Fig. 2 ist eine Auskleidungsplatte 6 dargestellt, wie sie beispielsweise zur Auskleidung von Formkammern von Formmaschinen zur Herstellung von Formblöcken oder Gußformen verwendet wird und die als Arbeitsplatte gemäß der Erfindung ausgebildet ist. Die Auskleidungsplatte 6 besteht, wie dies aus Fig. 3 zu erkennen ist, aus der Grundplatte 2 und der Verschleißschutzplatte 4, die durch die Klebstoffolie 3 miteinander verbunden sind. Die Verschleißschutzplatte 4 besitzt zahlreiche Entlüftungsdüsen 7, die vorzugsweise über die gesamte Fläche verteilt sein können. Die Entlüftungsdüsen 7 sind jeweils z.B. in Flächenbereichen ausgebildet, und zwar z.B. in Kreisflächenbereichen. Ein derartiger Kreisflächenbereich ist in Fig. 4 etwa maßstabsgerecht gezeigt, wobei die Entlüftungsdüsen 7 vorzugsweise als parallel zueinander verlaufende Schlitze ausgebildet sind. Diese Schlitze sind vorzugsweise durch Laserstrahl-Technik hergestellt, wobei der Laserstrahl automatisch so steuerbar ist, daß sich die Schlitze der Düsen 7 sehr schnell in wenigen Sekunden herstellen lassen. Im dargestellten Ausführungsbeispiel sind die Entlüftungsdüsen 7 als parallel zueinander verlaufende Schlitze ausgebildet, welche von der Innenfläche nach der Außenfläche zu, d.h. in Luftaustrittsrichtung, leicht konisch erweitert sind. Diese konische Erweiterung wird durch die Einstellung des Laserstrahls erreicht, so daß diejenige Seite der Verschleißschutzplatte 4, an der der Laserstrahl austritt, die Innenfläche zum Hohlraum einer mit der Auskleidungsplatte 6 ausgekleideten Formkammer bildet. Erfindungsgemäß ist nun vorgesehen, daß die Entlüftungsdüsen 7 ausschließlich in der Verschleißschutzplatte 4 vorhanden sind. Die Grundplatte 2 besitzt demgegenüber im Bereich der Entlüftungsdüsen 7 Luftaustrittsöffnungen 8. Diese Luftaustrittsöffnungen 8 sind in der Grundplatte 2 z.B. als zylindrische Bohrungen hergestellt. In der Klebstoffolie 3 sind im Bereich der Luftaustrittsöffnungen 8 und des Kreisflächenbereichs der Entlüftungsdüsen 7 insbesondere durchmessergleiche Lochungen 11 vorhanden. Zur Befestigung der Auskleidungsplatte 6 an äußeren, nicht gekennzeichneten Maschinenteilen, können in der Grundplatte 2 Gewindebohrungen 9 ausgebildet sein. Die Grundplatte 4 besteht zweckmäßigerweise aus einem Stahl mit mittleren chemischen Zusammensetzungskomponenten 0,16% C, 0,25% Si, 1,15% Mn und 0,95% Cr. Die Verschleißschutzplatte 4 ist vorzugsweise gehärtet und besteht aus einem Stahl mit den mittleren chemischen Zusammensetzungskomponenten von 1,55% C, 12% Cr, 0,7% Mo und 1,0% V.

Die Luftaustrittsbereiche, in denen die Entlüftungsdüsen 7 angeordnet sind, können eine beliebige Ausbildung besitzen. Auch können die Entlüftungsdüsen 7 beispielsweise einen kreisförmigen Querschnitt aufweisen. Die Lochungen 11 und die Luftaustrittsöffnungen 8 werden zweckmäßigerweise so ausgebildet, daß eine optimale Luftströmung erreicht wird. Zum Herstellen der Entlüftungsdüsen 7 kann auch die Wasserstrahl-Technik oder das Drahterodieren eingesetzt werden.

## Patentansprüche

1. Arbeitsplatte (1), bestehend aus einer metallischen Grundplatte (2) und einer auf dieser ein- oder beidseitig angeordneten dünneren Verschleißschutzplatte (4),
**dadurch gekennzeichnet,** daß die Verschleißschutzplatte (4) mit der Grundplatte (2) mittels einer Klebstoffolie (3) vollflächig verbunden ist, die aus einem strukturellen Trägermaterial und einem auf diesem beidseitig aufgebrachten polymeren Klebstoff gebildet ist.

2. Arbeitsplatte nach Anspruch 1,
**dadurch gekennzeichnet,** daß das Trägermaterial ein Gewebe oder Vlies aus Glasfasern, Zellstoff, Polyamidfasern und/oder Kohlefasern ist.

3. Arbeitsplatte nach Anspruch 1 oder 2,
**dadurch gekennzeichnet,** daß der Klebstoff aus einem Epoxidharz gebildet ist.

4. Arbeitsplatte nach einem der Ansprüche 1 bis 3,
**dadurch gekennzeichnet,** daß das Dickenverhältnis der Grundplatte (2) zur Verschleißschutzplatte (4) etwa 3:1 bis 15:1 beträgt.

5. Arbeitsplatte nach einem der Ansprüche 1 bis 4,
**dadurch gekennzeichnet,** daß die Verschleißschutzplatte (4) eine Dicke von etwa 1,0 bis 3 mm aufweist.

6. Arbeitsplatte nach einem der Ansprüche 1 bis 5,
**dadurch gekennzeichnet,** daß die Dicke der Klebstoffolie (3) etwa 0,5 bis 2 mm beträgt.

7. Arbeitsplatte nach einem der Ansprüche 1 bis 6,
**dadurch gekennzeichnet,** daß das Verhältnis vom Gesamtdicke der Arbeitsplatte zur größten Längenausdehnung 1:20 bis 1:2000 beträgt.

8. Arbeitsplatte nach einem der Ansprüche 1 bis 7,
**dadurch gekennzeichnet,** daß die Grundplatte (2) aus Stahl oder Aluminium besteht.

9. Arbeitsplatte nach einem der Ansprüche 1 bis 8,
**dadurch gekennzeichnet,** daß die Verschleißschutzplatte (4) aus einem gehärteten Stahl, aus Keramikmaterial oder Hartmetall besteht.

10. Arbeitsplatte nach einem der Ansprüche 1 bis 9,
**dadurch gekennzeichnet,** daß in der Verschleißschutzplatte (4) Entlüftungsdüsen (7) hergestellt sind, die sich ausschließlich in der Verschleißschutzplatte (4) befinden, und daß die Grundplatte (2) im Bereich der Entlüftungsdüsen (7) Luftaustrittsöffnungen (8) besitzt.

11. Arbeitsplatte nach Anspruch 10,
**dadurch gekennzeichnet,** daß die Entlüftungsdüsen (7) durch Laserstrahl-Technik, Wasserstrahl-Technik oder Drahterodier-Technik hergestellt sind.

12. Arbeitsplatte nach Anspruch 10 oder 11,
**dadurch gekennzeichnet,** daß die Entlüftungsdüsen (7) als parallel zueinander verlaufende Schlitze ausgebildet sind, welche in Luftaustrittsrichtung konisch erweitert sind.

13. Arbeitsplatte nach einem der Ansprüche 10 bis 12,
**dadurch gekennzeichnet,** daß die Entlüftungsdüsen (7) in Kreisflächenbereichen angeordnet sind, und daß die Luftaustrittsöffnungen (8) in der Grundplatte (2) als zylindrische Bohrungen ausgebildet sind.

14. Arbeitsplatte nach einem der Ansprüche 10 bis 13,
**dadurch gekennzeichnet,** daß die Kreisflächenbereiche der Entlüftungsdüsen (7) reihenweise gleichmäßig über die Verschleißschutzplatte (4) verteilt sind.

15. Arbeitsplatte nach einem der Ansprüche 10 bis 14,
**dadurch gekennzeichnet,** daß die Klebstoffolie (3) im Bereich zwischen den Entlüftungsdüsen (7) und den Luftaustrittsöffnungen (8) Lochungen (11) aufweist, deren Durchmesser vorzugsweise dem Durchmesser der Kreisflächenbereiche der Entlüftungsdüsen (7) entsprechen.
